# EUROPÄISCHE PATENTSCHRIFT

(11) **EP 1 836 753 B1**
(45) Veröffentlichungstag und Bekanntmachung des Hinweises auf die Patenterteilung: **03.07.2019**
(21) Anmeldenummer: 06701270.8
(22) Anmeldetag: 13.01.2006
(51) Int. Cl.: B60R 16/02, H01B 7/08, H01B 7/40

(54) **FENSTER- ODER FASSADENPROFIL UND ELEKTRISCHES KABEL FÜR EIN PROFIL FÜR EIN FENSTER, EINE TÜR ODER EINE FASSADE**
SECTION FOR A WINDOW OR FAÇADE AND ELECTRIC CABLE FOR A SECTION FOR A WINDOW, DOOR OR FAÇADE
PROFILE DE FENETRE OU DE FAÇADE ET CABLE ELECTRIQUE DESTINE A UN PROFILE POUR UNE FENETRE, UNE PORTE OU UNE FAÇADE

(30) Priorität: 14.01.2005 DE 20500582 U; 14.01.2005 DE 20500608 U; 14.01.2005 DE 20500607 U
(43) Veröffentlichungstag der Anmeldung: 26.09.2007
(73) Patentinhaber: SCHÜCO International KG, 33609 Bielefeld (DE)
(72) Erfinder: WILKER, Burkhard, 32760 Detmold (DE); HANKE, Carsten, 33613 Bielefeld (DE); OESTERMANN, Markus, 48324 Sendenhorst (DE)
(74) Vertreter: Dantz, Jan Henning
(86) Internationale Anmeldenummer: PCT/EP2006/050207
(87) Internationale Veröffentlichungsnummer: WO 2006/075024

(56) Entgegenhaltungen:
- EP-A- 0 212 962
- DE-A1- 3 642 964
- US-A- 3 489 981
- US-A- 4 235 495
- US-A- 4 716 698
- US-A- 4 934 953
- PATENT ABSTRACTS OF JAPAN Bd. 2000, Nr. 03, 30. März 2000 (2000-03-30) -& JP 11 346424 A (YAZAKI CORP), 14. Dezember 1999 (1999-12-14)

## Beschreibung

Die Erfindung betrifft ein Rahmenprofil oder ein Fassadenprofil nach dem Oberbegriff des Anspruchs 1.

Bei Fenstern oder Türen mit elektrischen Funktionselementen wie elektromotorischen oder elektromagnetischen Antrieben oder Beschlägen oder Sensoren oder mit anderen Stromverbrauchern ist es notwendig, zu den elektrischen Funktionselementen ein Kabel zur Energieversorgung und/oder Steuerung zu legen.

Nach dem Stand der Technik werden Kabel zu diesem Zweck bei Fassaden z.B. durch Hohlkammern geführt oder am Außenumfang lose verlegt. Eine Lösung mit einer Kabelführung durch die Hohlkammern zeigt die EP 0 475 417 B2. Die Schrift zeigt auch eine Fassadenkonstruktion mit einer am Außenumfang eines Isolierprofils oder eines Außenprofils im Bereich des Glasfalzes angeordneten Kabelnut zur formschlüssigen Aufnahme eines elektrischen Kabels. Nachteilig sind hier insbesondere die nur schwierige Kontaktierbarkeit im Bereich des Glasfalzes sowie die Anordnung in einem feuchten Bereich an der Fassade, was die Gefahr von Kriechströmen und Korrosion mit sich bringt.

Ein gattungsgemäßer Stand der Technik ist aus der DE-A-36 42 964 bekannt. Offenbart wird eine Fassade mit einer Nut zur Aufnahme eines Kabels.

Zum technologischen Hintergrund wird ferner noch die US-A-3 489 981 genannt.

Es sind die bekannten Anordnungen oftmals optisch nicht zufriedenstellend und genügen auch aus weiteren Gründen nicht den Anforderungen an einen modernen Montage ablauf, z.B., da die Hohlkammern im Eckbereich mit Eckverbindern zu verschließen sind - was aufwendige weitere Bearbeitungen z.B. durch Fräsen zum Verlegen der Kabel durch den Eckbereich erforderlich machen kann - oder da in Nuten, in welche die Kabel eingelegt werden, noch weitere Funktionselemente angeordnet werden müssen. Die Kabel liegen damit quasi offen und ungeschützt, stören derart die Optik und die Montage und verteuern die Produktion. Auch sind aufwendige Kontaktierungen bzw. Anschlüsse erforderlich.

Die Erfindung hat zur Aufgabe, dass diese Probleme behoben werden. Es sollen ferner ein Profil und ein Fenster, eine Tür oder ein Fassadenelement geschaffen werden, in die das Kabel - bei einfacher Montage - integrierbar ist.

Die Erfindung löst diese Aufgabe durch den Gegenstand des Anspruchs 1.

Vorteilhafte Ausgestaltungen sind den Unteransprüchen zu entnehmen.

Die Kabelnut ermöglicht in einfachster Weise eine platzsparende, optisch vorteilhafte Unterbringung des Flachkabels direkt am Profil, insbesondere an einem der Profile des Flügelrahmens. Eine Unterbringung am Blendrahmen ist ebenfalls denkbar, die Anordnung am Flügelrahmen wird aber bevorzugt, wenn dort auch die zu versorgenden und anzusteuernden Verbraucher und Funktionselemente untergebracht sind. Diese Kabelnut lässt sich einfach bei der Herstellung des Profils mit anformen bzw. ausbilden, ohne dass hierzu Arbeitsgänge erforderlich wären, die über die sowieso zur Herstellung des Profils erforderlichen Arbeitsgänge hinausgingen.

Die Kabelnut vereinfacht die Montage erheblich. Besonders deutlich wird dieser Vorteil bei Einsatz des erfindungsgemäßen vorgeschlagenen Flachbandkabels, welches einfach in die Kabelnut eingeklipst wird.

Die Kabelnut lässt sich einfach bei der Herstellung des Profils mit anformen bzw. auszubilden, ohne dass hierzu Arbeitsgänge erforderlich wären, die über die sowieso zur Herstellung des Profils erforderlichen Arbeitsgänge hinausgingen.

Es ist ferner die Kabelnut innerhalb einer umgebenden größeren Nut, insbesondere innerhalb einer Beschlagnut zur Aufnahme von Beschlägen, am Rahmenprofil ausgebildet.

Die "Nut in der Nut" ermöglicht in einfachster Weise eine platzsparende, optisch vorteilhafte Unterbringung eines mehradrigen elektrischen Kabels direkt am Profil, insbesondere an einem der Profile des Flügelrahmens. Eine Unterbringung am Blendrahmen ist ebenfalls denkbar, die Anordnung am Flügelrahmen wird aber bevorzugt, wenn dort auch die zu versorgenden und anzusteuernden Verbraucher und Funktionselemente untergebracht sind.

Die Kabelnut vereinfacht die Montage erheblich. Besonders deutlich wird dieser Vorteil bei Einsatz der vorgeschlagenen Kabel zur werkzeugfreien Kontaktierung mit Hilfe von Piercingkontakten. Hierzu eignen sich insbesondere Flachbandkabel, welche einfach in die Kabelnut eingeklipst werden. Denkbar sind aber auch Kabel mit einer von einer Flachbandgeometrie abweichenden Form, so z.B. solche mit leicht ovalem Querschnitt.

Unter Profil im Sinne der Anmeldung sind sowohl ein mehrteiliges Verbundprofil zu verstehen als auch ein einzelnes Metallprofil zur Herstellung eines Blend- oder Flügelrahmens.

Nach einer Variante sind die Kabelnut und das Kabel derart aufeinander abgestimmt, dass eine Kontaktierung der Leitungsadern des Kabels von außen mittels isolationsdurchstechender bzw. -schneidender Kontakte möglich ist.

Nach einer weiteren Variante ist das Kabel als Flachbandkabel ausgebildet, welches an seinen Schmalseiten seitliche Nasen aufweist, die dazu ausgelegt sind, im montierten Zustand elastisch hinter Stege einer Kabelnut am Rahmenprofil zu greifen.

Derart ist das Flachbandkabel einfach und unkompliziert montierbar und optisch vorteilhaft am Profil unterbringbar.

Besonders vorteilhaft ist es dabei, wenn die Kabelnut und das Kabel derart aufeinander abgestimmt sind, dass eine Kontaktierung der Leitungsadern des Kabels von außen mittels isolationsdurchstechender bzw. -schneidender Kontakte möglich ist, da derart die Kontaktierung werkzeugfrei erfolgt.

Die Erfindung schafft neben den einzelnen Profilen auch ganze Fenster-, Tür- oder Fassadenelemente mit derartigen Profilen.

Die Ausführungsform der "Nut in der Nut" ermöglicht darüber hinaus in einfachster Weise eine platzsparende, optisch vorteilhafte Unterbringung eines mehradrigen elektrischen Kabels direkt am Fassadenprofil, insbesondere an einem der Fassadenprofile der Fassade. Unter Fassadenprofil im Sinne der Anmeldung sind sowohl ein mehrteiliges Verbundprofil zu verstehen als auch ein einzelnes Metallprofil zur Herstellung eines Fassadenelementes. Die Kabelnut lässt sich einfach bei der Herstellung des Fassadenprofils mit anformen bzw. auszubilden, ohne dass hierzu Arbeitsgänge erforderlich wären, die über die sowieso zur Herstellung des Fassadenprofils erforderlichen Arbeitsgänge hinausgingen.

Vorzugsweise sind dabei die Kabelnut und das Kabel derart aufeinander abgestimmt, dass eine Kontaktierung der Leitungsadern des Kabels in der Kabelnut von außen mittels isolationsdurchstechender bzw. -schneidender Kontakte möglich ist.

In der Nut an dem Innenprofil ist das Kabel vor Feuchtigkeit geschützt unterbringbar sowie leicht montierbar. Die Nachteile des Standes der Technik werden auf einfache Weise behoben. Besonders bevorzugt wird zur Vermeidung jeglicher Feuchtigkeitsprobleme ein Kastenprofil an dem Innenprofil - und dort bevorzugt die Seitenwandung senkrecht zur Scheibenebene - zur Anordnung der Nut genutzt.

Die Kabelnut vereinfacht die Montage erheblich. Besonders deutlich wird dieser Vorteil bei Einsatz der vorgeschlagenen Kabel zur werkzeugfreien Kontaktierung mit Hilfe von Piercingkontakten. Hierzu eignen sich insbesondere Flachbandkabel, welche einfach in die Kabelnut eingeklipst werden. Denkbar sind aber auch Kabel mit einer von einer Flachbandgeometrie abweichenden Form, so z.B. solche mit leicht ovalem Querschnitt.

Das Rahmenprofil oder Fassadenprofil kann aus Metall, insbesondere Leichtmetall, Holz oder Kunststoff bestehen.

Die Erfindung schafft neben den einzelnen Fassadenprofile auch ganze Fassadenelemente mit derartigen Fassadenprofilen.

Weitere vorteilhafte Ausgestaltungen der Erfindung sind den übrigen Unteransprüchen zu entnehmen.

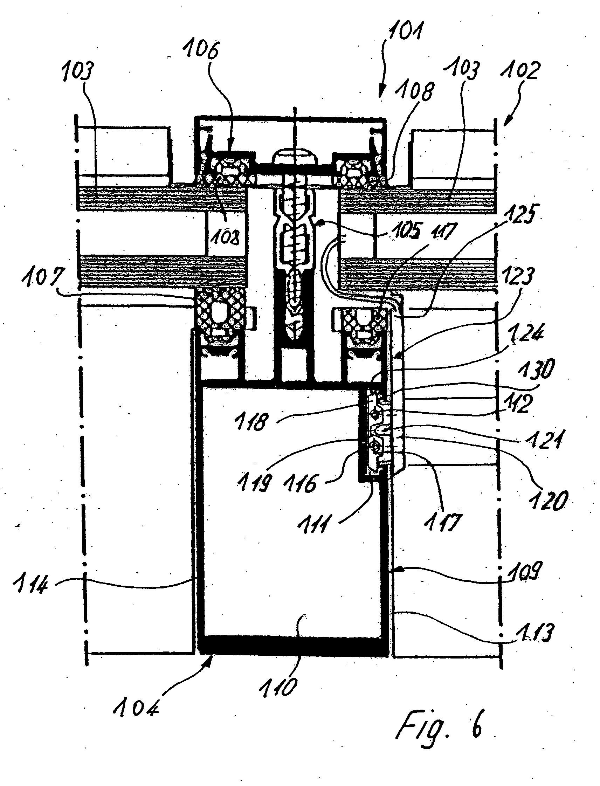

Nachfolgend wird die Erfindung unter Bezug auf die Zeichnung anhand eines Ausführungsbeispiels näher beschrieben. Fig. 6 betrifft keine Ausführungsform er Erfindung. Es zeigen:
Fig. 1 einen Teilschnitt eines Fensters;
Fig. 2 und 3 jeweils leicht zueinander versetzte, vergrößerte Ausschnitte aus Fig. 1 mit und ohne elektrisch leitendes Kabel; und
Fig.4 eine weitere Ausführungsform in einem Teilschnitt nach Art der Fig. 2; und
Fig. 5 einen Ansicht des axialen Endes eines erfindungsgemäßen Flachbandkabels.
Fig. 6 eine Schnitt durch den Bereich eines ersten Pfostenprofils einer Fassade, der nicht der vorliegenden Erfindung entspricht,
Fig. 7 eine Schnitt durch den Bereich eines zweiten Pfostenprofils einer Fassade.

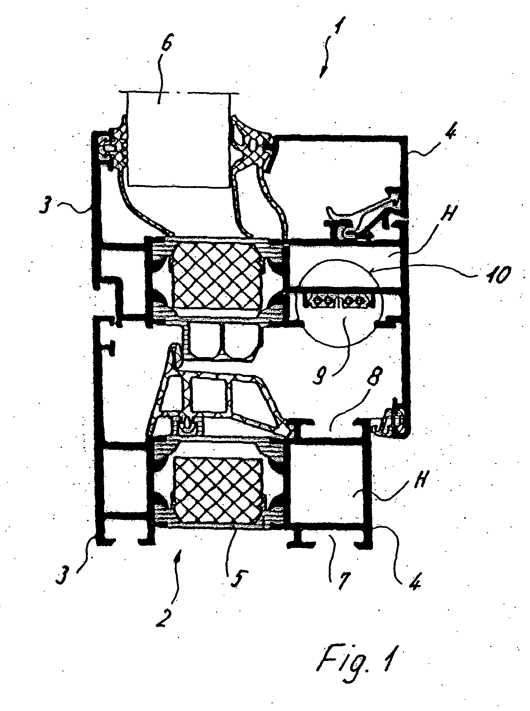

Fig. 1 zeigt einen Teilschnitt eines Fensters, bestehend aus einem Flügelrahmen 1, der beweglich in einem Blendrahmen angeordnet ist. Der Blendrahmen 2 ist z.B. an ein Mauerwerk angebunden oder in eine Fassade eingebunden.

Die Profile des Flügelrahmens 1 bzw. des Blendrahmens sind jeweils als Verbundprofil gefertigt und weisen eine Außenschale 3 und eine Innenschale 4 sowie eine die Außenschale 3 mit der Innenschale 4 koppelnde Wärmedämmzone auf, die aus Kunststoff-Isolierstegen 5 besteht.

Die Außenschale 3 und die Innenschale 4 - also die einzelnen Profile des Verbundprofils - sind jeweils als Metallprofile gefertigt und bestehen z.B. aus einem Leichtmetallwerkstoff oder Stahl. Es ist auch denkbar, sie aus Holz oder Kunststoff zu fertigen. Z.B. in wärmeren Klimazonen bzw. im Innenausbau von Gebäuden ist es zudem denkbar, auf eine Verbundbauweise mit einem Isoliersteg 5 zu verzichten. In den Flügelrahmen ist eine Isolierglasscheibe 6 eingesetzt.

Die einzelnen Profile 3, 4 des Flügelrahmens 1 und des Blendrahmens 2 weisen jeweils Hohlkammern H auf sowie an ihrem Außenumfang verschiedene Nuten, so insbesondere jeweils Nuten 8, 9 zur Aufnahme von korrespondierenden Funktionselementen wie Beschlagteilen oder Antrieben z.B. zum Verriegeln des Flügels am Blendrahmen oder zum Öffnen und/oder Schließen des Flügels.

Die Beschlagnuten sind insbesondere an den einander zugewandten Seiten des Blend- und des Flügelrahmens ausgebildet. Eine Blendrahmennut 7 dient zur formschlüssigen Verbindung mit angrenzenden Bauteilen (Fassade, weitere Fenster, Türen etc.) oder zum Wandanschluss. Die Hohlkammern H dienen insbesondere zur Aufnahme von Eckverbindern und zur Wärmedämmung.

Das Profil besteht vorzugsweise aus Metall, insbesondere Leichtmetall. Theoretisch kann es auch aus Holz oder Kunststoff bestehen.

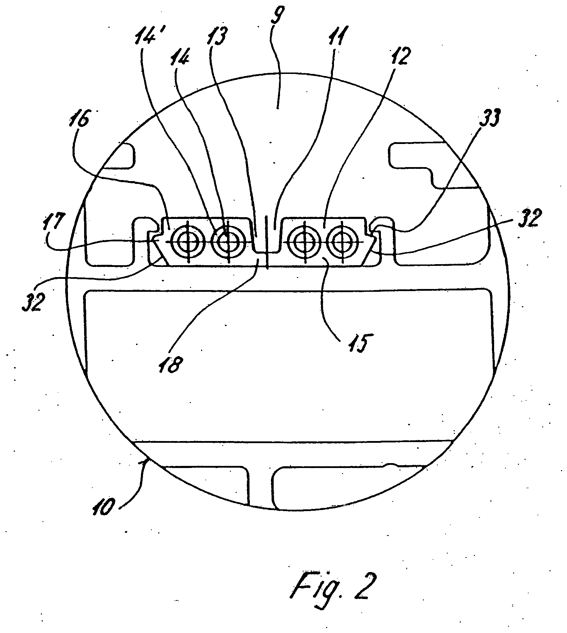

Fig. 2 zeigt den Flügelausschnitt 10 aus Fig. 1.

Gut zu erkennen ist, dass am Außenumfang des Flügelrahmenprofils wenigstens eine sich vorzugsweise parallel zum Profil erstreckende Kabelnut 11 zur form- und kraftschlüssigen Aufnahme eines elektrischen Kabels 12 angeordnet ist. Diese Kabelnut 11 ist hier in bevorzugter Ausgestaltung am Grund der Beschlagnut 9 des Flügelrahmenprofils 1 angeordnet, da das Flachbandkabel derart von außen nicht sichtbar und platzsparend unter Beschlagteilen angeordnet ist. Denkbar ist aber auch eine Anordnung an beliebiger anderer Stelle des Außenumfangs des Profils.

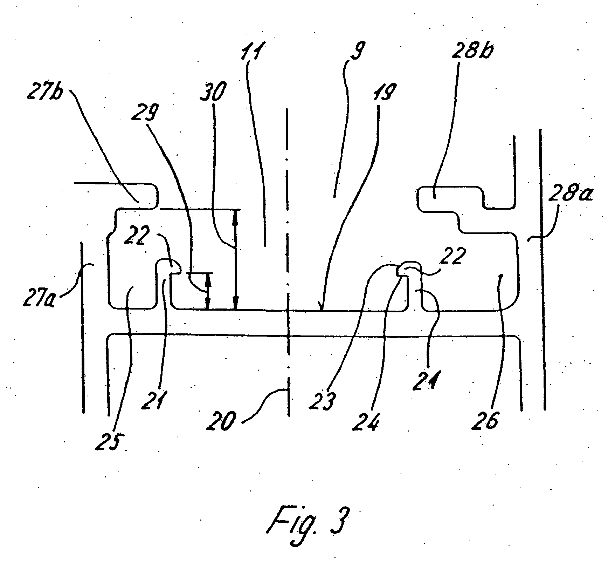

Das Flachbandkabel 12 (siehe Fig. 3 bis 5) ist in die Kabelnut 11 einfach von außen einklipsbar. Die sich parallel zum Profil an dessen Außenseite erstreckenden "Kabelnut 11 in der Nut 9" bietet den Vorteil, dass das Flachbandkabel geschützt und verdeckt liegt und die Optik des Fensters nicht stört, ohne dass sich die Montage der Beschläge in deren Nut 9 erschwert oder dass das Flachbandkabel 12 bei dieser Montage stört.

Denkbar wäre es auch, eine entsprechende Kabelnut am Blendrahmen vorzusehen (hier nicht dargestellt) oder in einer anderen Nut des Fensters oder einer Nut direkt am Außenumfang, wie dieses für Fassaden bevorzugt wird, da hier sonst nur noch der Glasfalz zur Verfügung steht, was aber aufgrund von auftretender Feuchtigkeit relativ nachteilig ist. Bevorzugt wird aber die kompakte Anordnung der Kabelnut 11 in der Beschlagnut 9 der Innenschale 4 des Flügelrahmenprofils 1, insbesondere in einem dem Blendrahmen direkt gegenüberliegenden Spaltbereich.

Das Flügelrahmenprofil 1 kann je nach Auslegung zur Herstellung eines Drehfensters, eines Kippfensters, eine Dreh-/Kippfenster, eines Schiebefensters oder z.B. einer Balkonverglasung genutzt werden. Alternativ können auch Türen oder Fassadenelemente gefertigt werden, wobei die letzteren gemäß des Sprachgebrauches dieser Schrift auch Lichtdachelemente umfassen.

Die Kabelnut 11 zur Aufnahme eines elektrisch leitenden Kabels ist stets vorteilhaft, wenn es darum geht, Funktionselemente am Fenster wie z.B. Verriegelungselemente, Sensoren, Leuchtmittel wie z.B. Leuchtdioden oder einen Antrieb zum Öffnen und Schließen mit Energie zu versorgen.

Dazu wird das Flachbandkabel 12 z.B. vom Blendrahmen an einer Übergangsstelle zum Flügelrahmen verlegt und dann am Außenumfang des Flügelrahmenprofils zu den anzusteuernden oder mit Energie zu versorgenden Funktionselementen wie einem Antrieb oder einer elektrischen Verriegelung geführt.

Das Flachbandkabel 12 weist hier beispielhaft vier parallel zueinander in einer Ebene angeordnete Leiter bzw. Litzen 14 auf, die jeweils eine Isolierung 14' aufweisen und die in den Mantel 15 bzw. Grundkörper 16 des Flachbandkabels 12 eingebettet sind und die von außen in der Nut z.B. mittels Piercingkontakten kontaktierbar sind.

Der Kabelmantel 15 bzw. Grundkörper 16 ist hier zwischen den zwei mittleren zwei Leitern mit einer nutartigen Einkerbung 13 versehen, die parallel zu den Leitern 14 in deren Längserstreckung verläuft und die es in vorteilhafter Weise ermöglicht, das Flachbandkabel in der Nut auszurichten bzw. zu zentrieren, indem ein entsprechender Steckkontakt auf die Nut gesetzt wird, der einen Zentrieransatz aufweist, der in die Einkerbung 13 eingreift (hier nicht zu erkennen).

Die Einkerbung 13 hat einen konischen Querschnitt und durchsetzt das Flachbandkabel 12 fast vollständig (z.B. um ca. 60 - 70%), so dass es beim Einstecken in die Kabelnut 11 gebogen bzw. zusammengedrückt werden kann, bis es sich in der Kabelnut 11 befindet, wo es sich wieder aufweitet. Die Einkerbung dient auch zur Zentrierung mittels einer korrespondierenden Zentriervorrichtung (Rahmen, hier nicht dargestellt), so dass die Litzen genau kontaktierbar sind.

Das Flachbandkabel 12 ist elastisch ausgebildet. Insbesondere der Mantel 15, der einen Grundkörper 16 ausbildet, besteht aus flexiblem Material, z.B. aus EPDM, um das Flachbandkabel gut um enge Ecken am Flügelrahmen biegen bzw. legen zu können. Dabei kann die Kabelnut 11 auch am oberen und/oder unteren Profil und/oder gegenüberliegenden Profil des Flügelrahmens ausgebildet sein, also ganz oder teilweise umlaufend (hier wiederum nicht zu erkennen).

Das Flachbandkabel weist hier beispielhaft vier litzenartige Leiter 14 auf. Denkbar sind aber auch Ausführungen mit mehr oder weniger Leitern, falls z.B. nur eine Stromversorgung zum Versorgen eines elektrischen Antriebes notwendig ist oder die Versorgung vieler Antriebe notwendig ist. Die Lagerhaltung ist mit diesem Flachbandkabel sehr einfach.

Das Flachbandkabel 12 weist seitliche Nasen 17 auf, die im montierten Zustand elastisch hinter Stege 22 der Kabelnut 11 greifen.

Diese Nasen weisen wiederum an ihren in Einführrichtung in die Nut weisenden Seite Einführschrägen 32 auf, die das Einführen in die Kabelnut 11 vereinfachen. Weitere Schrägen 33 an der gegenüberliegenden Seite der Nasen vereinfachen dagegen die Demontage des Kabels z.B. im Reparaturfall oder dgl.

Wie in Fig. 3 zu erkennen, ist die Kabelnut 11 vollständig innerhalb in der Beschlagnut 9 angeordnet und weist eine Symmetrieachse 20 auf. Sie liegt aber in der Nut 9 leicht seitlich versetzt mittig unter deren Öffnung.

Beide Nuten 9, 11 weisen zudem ein- und denselben Boden bzw. Grund 19 auf, aus dem seitliche Stege 21 für die Kabelnut 11 winklig, insbesondere rechtwinklig vorstehen .

An den freien Enden dieser Stege sind die zueinander gerichteten Stege 22 ausgebildet, die jeweils Hinterschnitte zum Verrasten des Flachkabels 12 ausbilden.

Die Stege 22 sind zur Vereinfachung der Montage des Flachbandkabels 12 außen bzw. zur Nutöffnungsseite hin mit Schrägen 23 versehen. Die innere Stegfläche 24 dient zum Hintergreifen des Flachkabels 12. Das Flachkabel füllt die Nut nahezu vollständig aus und schließt diese mit einer im wesentlichen ebenen Oberfläche ab.

Die Nutstege 22 bilden in der Beschlagnut 9 seitliche Kammern 25 und 26 aus. Diese Kammern 25 und 26 sind unterschiedlich groß, wodurch sich ein unsymmetrischer Aufbau in der Beschlagnut ergibt. In den Kammern können die Funktionselemente gehalten sein.

Die Beschlagnut 9 und/oder die Kabelnut 11 können umlaufend an jedem der typischerweise vier Rahmenprofile des Flügelrahmens ausgebildet sein. Das Flachkabel 12 kann dabei in einfacher Weise als Auflagefläche für einen Beschlag oder ein sonstiges Funktionselement in der Nut genutzt werden (hier nicht zu erkennen). Die Anordnung der Kabelnut 11 in der Beschlagnut 9 ist besonders vorteilhaft aber nicht zwingend.

Die Beschlagnut 9 weist seitliche Wandungen 27a, 28a sowie nach innen gerichtete Stege 27b, 28b auf, die deutlich dicker und länger sind als die Stege der Kabelnut 11, was zeigt, dass die Stege 21, 22 der Kabelnut 11, die nur das Flachbandkabel halten und ansonsten keine tragende Funktion übernehmen müssen, materialsparend ausgelegt werden können. Beschläge und Flachbandkabel können kompakt in dem direkt darüber liegenden, verbleibenden Freiraum der Beschlagnut 9 angeordnet werden, ohne dass das Flachbandkabel die Montage der Beschläge behindert.

Die Höhen 29 und 30 der Nutstege der Nuten 9 und 11 weisen ein Verhältnis von hier 1 / 3 auf, was genügend Platz in der Beschlagnut 9 zur Anordnung der eigentlichen Beschlagteile und/oder sonstiger Funktionselemente belässt.

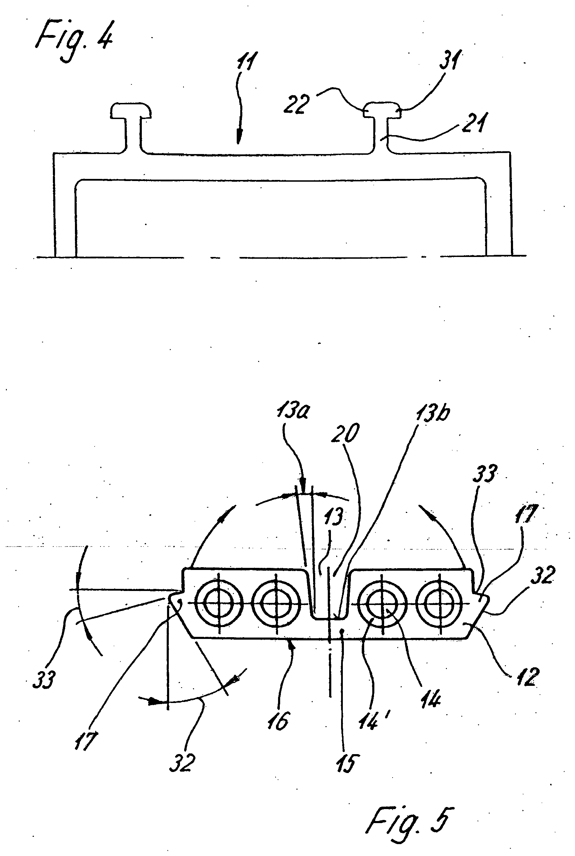

Fig. 4 zeigt eine Ausführungsform, bei der auf der den Stegen 22 gegenüberliegenden Seite der Kabelnutstege 21 weitere Stege 31 angeformt sind, an denen ein Steckerelement zur Kontaktierung der Leiter des Kabels 12 verrastbar ist (hier nicht dargestellt). Diese Variante wird bevorzugt, wenn die Kabelnut 11 nicht innerhalb einer Beschlagnut oder dgl. angeordnet ist. Alternativ kann die Verrastung des Steckers auch in der Beschlagnut an deren Stegen 27, 28 erfolgen.

Das Flachbandkabel 12 und die Kabelnut 11 sind derart ausgelegt, dass das Flachbandkabel zwar sicher in der Kabelnut 11 verrastet wird, aber in derselben leicht seitlich bewegbar bleibt. Dieses Spiel ermöglicht es, dass Flachbandkabel in der Nut auszurichten, beispielsweise mittels eines Rahmens, auf den dann ein Stecker aufgesetzt wird oder z.B. mittels des Steckers selbst.

Fig. 6 offenbart ein Pfostenprofil 101 einer Fassade 102, die aus einer Rahmenkonstruktion aus Pfosten- und Riegelprofilen sowie Flächenelementen wie Scheiben 103 oder dgl. besteht. Da die Kabelnut nach dieser Variante sowohl an den Pfosten- als auch an den Riegelprofilen realisierbar und vorzugsweise ganz oder teilweise umlaufend am Rahmenwerk angeordnet ist, wird nachfolgend allgemeiner von einem Fassadenprofil gesprochen.

Das Fassadenprofil 101 weist hier ein Innenprofil 104, einen Isolator 105 und eine Außenschale 106 auf. Zwischen dem Innenprofil 104 und der Außenschale 106 sind beidseits des Isolators Dichtungen 107, 108 angeordnet, die jeweils an einer der Scheiben 103 anliegen.

Das Innenprofil 104 weist in ihrem von der Scheibe abgewandten Bereich ein Kastenprofil 109 auf, das eine Hohlkammer 110 umschließt.

Die Innen- und die Außenschale bestehen in der Regel aus Metall, vorzugsweise aus Leichtmetall, insbesondere aus einer Aluminiumlegierung.

Das Innenprofil 104 ist hier im Bereich ihre Kastenprofils 109 mit einer hinterschnittenen Kabelnut 111 zur formschlüssigen Aufnahme eines Kabels, insbesondere eines Flachbandkabels 112 versehen. Hier ist das Innenprofil 104 besonders vorteilhaft an einer der beiden senkrecht zur Scheibenebene ausgerichteten Seitenwandungen 113, 114 des Innenprofils bzw. der Innenschale 104 ausgebildet.

Die Außenschale 106 und das Innenprofil 104 - also die einzelnen Profile des Verbundprofils - sind jeweils als Metallprofile gefertigt und bestehen z.B. aus einem Leichtmetallwerkstoff oder Stahl. Es ist auch denkbar, sie aus Holz oder Kunststoff zu fertigen. Z.B. in wärmeren Klimazonen bzw. im Innenausbau von Gebäuden ist es zudem denkbar, auf eine Verbundbauweise mit einem Isoliersteg 105 zu verzichten.

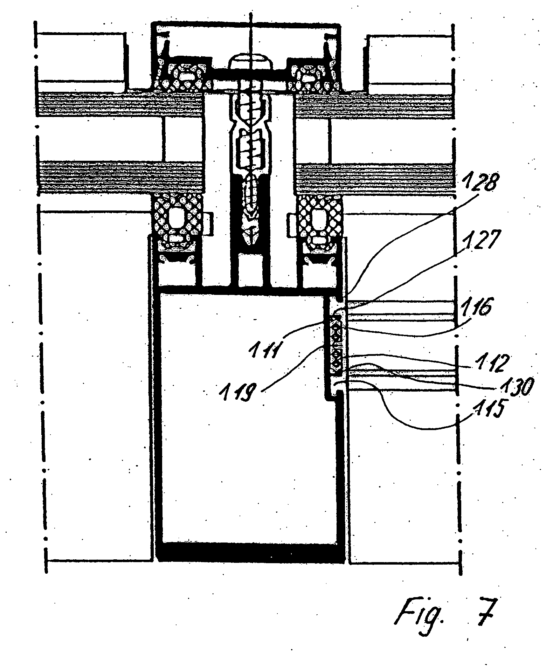

Nach Fig. 7 ist die Kabelnut 111 innerhalb einer sie umgebenden Nut 115 ausgebildet, die vorzugsweise zur Aufnahme von Funktionselementen wie Transformatoren, Beschlagteilen oder Antrieben z.B. zum Versorgen von Leuchtmitteln oder dgl. sowie zur Anbringung eines Steckers dient. Auch diese umgebende Nut 115 ist an der zur Scheibenebene senkrechten Seite des Innenprofils, insbesondere an einer der beiden Seitenwandungen 113, 114 des Kastenprofils, vorzugsweise wiederum unmittelbar unterhalb der Auflagebereiche für die Dichtungen 107,108 , ausgebildet.

Nach Fig. 7 ist die Kabelnut 111 am Grund der weiteren umgebenden Nut 115 angeordnet, wodurch das Flachbandkabel von außen nicht sichtbar und wiederum platzsparend angeordnet ist. Denkbar ist aber auch eine Anordnung an anderer Stelle des Außenumfangs des Fassadenprofils, obwohl die gewählte Anordnung als besonders montagefreundlich und witterungsgeschützt bevorzugt wird.

Das Flachbandkabel 112 ist in die Kabelnut 111 einfach von außen einklipsbar.

Die sich parallel zum Fassadenprofil an dessen Außenseite erstreckenden "Kabelnut 111 in der Nut 115 nach Fig. 7 bietet den Vorteil, dass das Flachbandkabel besonders geschützt und verdeckt liegt und die Optik nicht stört, ohne dass sich die Montage erschwert.

Unter Fassadenelementen im Sinne dieser Anmeldung sind auch Lichtdachelemente zu verstehen.

Die Kabelnut 111 zur Aufnahme eines elektrisch leitenden Kabels ist stets vorteilhaft, wenn es darum geht, Funktionselemente wie z.B. Verriegelungselemente, Sensoren, Leuchtmittel wie z.B. Leuchtdioden oder einen Antrieb mit Energie zu versorgen oder anzusteuern. Bei Photovoltaikanlagen können sie auch zur Ableitung des erzeugten Stroms genutzt werden.

Die Kabelnut 111 ist nach Fig. 6 und 2 in die Seitenwandung des Innenprofils 104 nach Art einer Ausnehmung nach innen zur Hohlkammer 110 hin eingeformt. Sie weist nach Fig. 6 und Fig. 7 jeweils nach innen kragende Stege 130 auf, hinter denen das Flachbandkabel verrastbar ist.

Nach Fig. 6 sind die Stege 130 "als Grenzfall der Nut in der Nut" in sich gestuft ausgebildet, so dass sie auch zum Verrasten einer Abdeckung und/oder eines Steckers nutzbar sind.

Das Flachbandkabel 112 weist nach Fig. 6 zwei und nach Fig. 7 vier parallel zueinander in einer Ebene angeordnete Leiter bzw. Litzen 116 auf, die jeweils eine Isolierung 117 aufweisen und die in den Mantel 118 bzw. Grundkörper des Flachbandkabels 112 eingebettet sind und die von außen in der Kabelnut z.B. mittels isolationsdurchstechender oder -schneidender Piercingkontakte kontaktierbar sind.

Der Kabelmantel 118 ist hier zwischen den zwei mittleren zwei Leitern mit einer nutartigen Einkerbung 119 versehen, die parallel zu den Leitern 114 in deren Längserstreckung verläuft und die es in vorteilhafter Weise ermöglicht, das Flachbandkabel in der Nut auszurichten bzw. zu zentrieren, indem ein entsprechender Stecker 120 auf die Nut gesetzt wird, der einen Zentrieransatz 121 aufweist, der in die Einkerbung 119 eingreift.

Der Zentrieransatz 121 kann federnd ausgelegt sein, so dass er zunächst das Kabel 112 ausrichtet und dann komprimiert wird, bevor isolationsdurchstechende Kontakte die Leiter kontaktieren.

Der Stecker weist ein Gehäuse bzw. eine Abdeckung 123 auf, an welcher der Zentrierabsatz 121 ausgebildet ist. Rastnasen 124 dienen zur Verrastung in der Kabelnut bzw. der umgebenden Nut (Fig. 7).

Ein seitlicher Gehäuseansatz 125 kann sich bis in den Bereich der Glasanlagedichtungen erstrecken, die z.B. von einem Kabel am Stecker senkrecht durchsetzt sind, um Sensoren oder Photovoltaikelemente oder dgl. z.B. im Glasfalz mit dem Flachbandkabel zu verbinden.

Die Einkerbung 119 hat vorzugsweise einen konischen Querschnitt und durchsetzt das Flachbandkabel fast vollständig (z.B. um ca. 60 - 70%), so dass es beim Einstecken in die Kabelnut 111 gebogen bzw. zusammengedrückt werden kann, bis es sich in der Kabelnut 111 befindet, wo es sich wieder aufweitet. Die Einkerbung dient auch zur Zentrierung mittels einer korrespondierenden Zentriervorrichtung (Rahmen, hier nicht dargestellt), so dass die Litzen genau kontaktierbar sind.

Das Flachbandkabel 112 ist elastisch ausgebildet. Insbesondere der Mantel besteht aus flexiblem Material, z.B. aus EPDM, um das Flachbandkabel gut um enge biegen bzw. legen zu können. Dabei kann die Kabelnut 111 auch ganz oder teilweise umlaufend (hier wiederum nicht zu erkennen) ausgebildet sein.

Das Flachbandkabel weist in Figur 2 beispielhaft vier litzenartige Leiter auf. Denkbar sind aber auch Ausführungen mit mehr oder weniger Leitern, falls z.B. nur eine Stromversorgung zum Versorgen eines elektrischen Antriebes notwendig ist. Die Lagerhaltung ist mit diesem Flachbandkabel sehr einfach.

Das Flachbandkabel 112 weist seitliche Nasen auf, die im montierten Zustand elastisch hinter nach innen vorkragende Stege 130 der Kabelnut 111 greifen.

Nach Fig. 7 kann der Stecker an nach innen vorkragenden Stege 28 der umgebenden Nut 115 verrastet werden. Dem ein -oder mehrteiligen Stecker kann ein Zentrierrahmen zum Ausrichten des Kabels zugeordnet sein, der zunächst auf die Nut gerastet wird und das Kabel ausrichtet, bevor der Stecker das Kabel kontaktiert (hier nicht zu erkennen). Der Stecker kann zur Befestigung auch an das Profil festklemmbar oder anschraubbar sein.

Beide Nuten 111, 115 weisen zudem ein- und denselben Boden bzw. Grund 119 auf, aus dem die seitlich begrenzenden Stege 127 der Kabelnut 111 winklig, insbesondere rechtwinklig vorstehen. An den freien Enden dieser Stege 127 sind die aufeinander zu gerichteten Stege 130 ausgebildet, die jeweils die Hinterschnitte zum Verrasten des Flachkabels 112 und/oder Steckers 120 ausbilden.

Das Flachkabel 112 füllt die Nut 111 nahezu vollständig aus und schließt diese mit einer im wesentlichen ebenen Oberfläche ab.

In den Bereichen, in denen keine Stecker auf die Kabelnuten 111 oder die Nuten 115 aufgesetzt sind, können diese mit vorzugsweise steckbaren Abdeckungen verschlossen werden (hier nicht zu erkennen).

Nach Fig. 6 und 7 sind damit an den freien Enden der Begrenzungsstege der Kabelnut 111 zueinander gerichtete Stege 130 ausgebildet, die einen Hinterschnitt zumindest für das Kabel 112 bilden. Vorzugsweise sind die Stege 130 gestuft ausgebildet und bilden einen Hinterschnitt für das Kabel 112 und einen von außen auf die Kabelnut 111 aufrastbaren Stecker 120. Das Kabel ist wiederum vorzugsweise als Flachbandkabel 112 mit mehreren vorzugsweise in einer Ebene parallel zueinander angeordneten Leitern 116 ausgebildet. Hier weist es wieder mehr als zwei, vorzugsweise vier, parallel zueinander in einer Ebene angeordnete Leiter bzw. Litzen 114 auf, die in den Mantel 118 des Flachbandkabels 112 eingebettet sind und es verfügt über seitliche Rastnasen 124. Der Mantel 118 ist wiederum mit einer nutartigen Einkerbung 119 versehen, die einen konischen Querschnitt hat und das Kabel um mehr als 50%, vorzugsweise fast vollständig, durchsetzt.

Dabei ist der Stecker 120 mit isolationsdurchstechenden Kontakten an dem Fassadenprofil befestigbar, insbesondere an der Kabelnut 111 oder der umgebenden Nut verrastbar. Der Stecker kann ein- oder mehrteilig ausgebildet sein und es kann ihm eine Zentrierrahmen zugeordnet sein. Es ist auch denkbar, dass der Stecker an dem Fassadenprofil festklemmbar oder verschraubbar ist und/oder dass am Stecker ein Zentrieransatz 121 zum Eingriff in die Einkerbung 119 des Kabels ausgebildet ist.

**Bezugszeichen**

| | |
|---|---|
| Flügelrahmen | 1 |
| Blendrahmen | 2 |
| Kunststoff-Isolierstege | 5 |
| Isolierglasscheibe | 6 |
| Blendrahmennut | 7 |
| Beschlagnuten | 8, 9 |
| | |
| Flügelausschnitt | 10 |
| Kabelnut | 11 |
| Kabels | 12 |
| Einkerbung | 13 |
| Leiter bzw. Litzen | 14 |
| Kabelmantel | 15 |
| Grundkörper | 16 |
| Rastnasen | 17 |
| Grund | 18, 19 |
| | |
| Symmetrieachse | 20 |
| Begrenzungsstege | 21 |
| Stege | 22 |
| Schrägen | 23 |
| Stegfläche | 24 |
| Kammern | 25 und 26 |
| Stege | 27a,b und 28a,b |
| Höhen | 29 und 30 |
| Stege | 31 |
| Einführschrägen | 32 |
| Schrägen | 33 |
| | |
| Pfostenprofil | 101 |
| Fassade | 102 |
| Scheiben | 103 |
| Innenprofil | 104 |
| Isolator | 105 |
| Außenschale | 106 |
| Dichtungen | 107, 108 |
| Kastenprofil | 109 |
| Hohlkammer | 110 |
| | |
| Kabelnut | 111 |
| Flachbandkabel | 112 |
| Seitenwandungen | 113, 114 |
| Nut | 115 |
| Leiter | 116 |
| Isolierung | 117 |
| Mantel | 118 |
| Einkerbung | 119 |
| Stecker | 120 |
| | |
| Zentrieransatz | 121 |
| Abdeckung | 123 |
| Rastnasen | 124 |
| Gehäuseansatz | 125 |
| Nasen | 126 |
| Stege | 127 |
| Stege | 128 |
| Stege | 130 |
| | |
| Hohlkammern | H |

## Patentansprüche

1. Rahmenprofil (1, 2, 3, 4) für einen Blend- oder Flügelrahmen eines Fensters, einer Tür oder Fassadenprofil einer Fassade mit einer am Außenumfang des Profils angeordneten, hinterschnittenen Kabelnut (11) zur formschlüssigen Aufnahme eines elektrischen Kabels (12) mit wenigstens zwei oder mehr elektrischen Leiter(n) (14), **dadurch gekennzeichnet, dass** die Kabelnut (11) innerhalb einer sie umgebenden größeren Nut (9), insbesondere innerhalb einer Beschlagnut (9) zur Aufnahme von Beschlägen, am Rahmenprofil ausgebildet ist.

2. Rahmenprofil oder Fassadenprofil nach Anspruch 1, **dadurch gekennzeichnet, dass** sich die Nut in Längsrichtung des Rahmenprofils (1, 2, 3, 4) erstreckt.

3. Rahmenprofil oder Fassadenprofil nach einem der vorstehenden Ansprüche, **dadurch gekennzeichnet, dass** das Rahmenprofil als Innenschale (4) eines Verbundprofils ausgebildet ist.

4. Rahmenprofil oder Fassadenprofil nach einem der vorstehenden Ansprüche, **dadurch gekennzeichnet, dass** die Kabelnut (12) seitliche Begrenzungsstege (21) aufweist, die aus dem Grund winklig, insbesondere rechtwinklig vorstehen.

5. Rahmenprofil oder Fassadenprofil nach einem der vorstehenden Ansprüche, **dadurch gekennzeichnet, dass** an den freien Enden der Begrenzungsstege (21) der Kabelnut (11) zueinander gerichtete weitere Stege (22) ausgebildet sind, die einen Hinterschnitt bilden.

6. Rahmenprofil oder Fassadenprofil nach einem der vorstehenden Ansprüche, **dadurch gekennzeichnet, dass** die Begrenzungsstege (22) zur Nutöffnungsseite hin mit Schrägen (23) versehen sind.

7. Rahmenprofil oder Fassadenprofil nach einem der vorstehenden Ansprüche mit einem formschlüssig in der Kabelnut aufgenommenen Flachbandkabel (12) mit mehreren in einer Ebene parallel zueinander angeordneten Leitern (4).

8. Rahmenprofil oder Fassadenprofil nach Anspruch 7, **dadurch gekennzeichnet, dass** das Flachbandkabel (12) mehrere, vorzugsweise vier, parallel zueinander in einer Ebene angeordnete Leiter bzw. Litzen (14) aufweist, die jeweils eine Ader und eine Isolierung aufweisen und die in den Mantel (15) des Flachbandkabels (12) eingebettet sind.

9. Rahmenprofil oder Fassadenprofil nach einem der vorstehenden Ansprüche 7 oder 8, **dadurch gekennzeichnet, dass** das Flachbandkabel (12) seitliche Nasen (17) aufweist, die im montierten Zustand elastisch hinter Stege (22) der Kabelnut (11) greifen.

10. Rahmenprofil oder Fassadenprofil nach einem der vorstehenden Ansprüche 7 bis 9, **dadurch gekennzeichnet, dass** der Kabelmantel (15) mit einer nutartigen Einkerbung (13) versehen ist, die parallel zu den Leitern (14) verläuft.

11. Rahmenprofil oder Fassadenprofil nach einem der vorstehenden Ansprüche 7 bis 10, **dadurch gekennzeichnet, dass** die Einkerbung (13) einen Sich verjüngenden, vorzugsweise konischen Querschnitt hat und das Kabel um mehr als 50%; vorzugsweise fast vollständig durchsetzt.

12. Rahmenprofil oder Fassadenprofil nach einem der Ansprüche 7 bis 11, **dadurch gekennzeichnet, dass** die Kabelnut (11) und das Kabel derart aufeinander abgestimmt sind, dass eine Kontaktierung der Leitungsadern des Kabels von aussen mittels isolationsdurchstechender bzw. -schneidender Kontakte möglich ist.

13. Rahmenprofil oder Fassadenprofil nach einem der vorstehenden Ansprüche, **dadurch gekennzeichnet, dass** die Kabelnut (12) und die Beschlagnut (9) einen in einer Ebene liegenden gemeinsamen Grund aufweisen.

14. Rahmenprofil oder Fassadenprofil nach einem der vorstehenden Ansprüche, **dadurch gekennzeichnet, dass** die Nut (9) für die Beschläge seitliche Begrenzungsstege (27a, 28a) aufweist.

15. Rahmenprofil oder Fassadenprofil nach einem der vorstehenden Ansprüche, **dadurch gekennzeichnet, dass** die Begrenzungsstege (27a, 28a) der Beschlagnut (9) und die Kabelnutstege (21) ein Höhenverhältnis von 1/3 aufweisen.

16. Fassadenprofil nach einem der vorstehenden Ansprüche, **dadurch gekennzeichnet, dass** die Kabelnut (111) senkrecht zur Scheibenebene an dem Innenprofil (104) ausgebildet ist.

17. Fenster, Tür oder Fassadenelement mit einem Rahmen- oder Fassadenprofil nach einem der vorstehenden Ansprüche.

## Claims

1. Frame section (1, 2, 3, 4) for a blind or wing frame of a window, door or façade section of a façade with an undercut cable groove (11) arranged on the outer circumference of the section for positively receiving an electrical cable (12) with at least two or more electrical conductors (14), **characterized in that** the cable groove (11) is formed on the frame section within a larger groove (9) surrounding it, in particular within a fitting groove (9) for receiving fittings.

2. Frame section or façade section according to claim 1, **characterized in that** the groove extends in the longitudinal direction of the frame section (1, 2, 3, 4).

3. Frame section or façade section according to one of the preceding claims, **characterized in that** the frame section is designed as an inner shell (4) of a composite section.

4. Frame section or façade section according to one of the preceding claims, **characterized in that** the cable groove (12) has lateral limiting webs (21) which project at an angle, in particular at right angles, from the base.

5. Frame section or façade section according to one of the preceding claims, **characterized in that** further webs (22) directed towards one another and forming an undercut are formed at the free ends of the limiting webs (21) of the cable groove (11).

6. Frame section or façade section according to one of the preceding claims, **characterized in that** the limiting webs (22) are provided with bevels (23) towards the groove opening side.

7. Frame section or façade section according to one of the preceding claims, having a flat ribbon cable (12) accommodated in the cable groove in a form-fitting manner and having a plurality of conductors (4) arranged parallel to one another in one plane.

8. Frame section or façade section according to claim 7, **characterized in that** the flat ribbon cable (12) has a plurality of conductors or strands (14), preferably four thereof, which are arranged parallel to one another in one plane and which each have a core and an insulation and are embedded in the sheath (15) of the flat ribbon cable (12).

9. Frame section or façade section according to one of the preceding claims 7 or 8, **characterized in that** the flat ribbon cable (12) has lateral lugs (17) which, in the assembled state, engage elastically behind webs (22) of the cable groove (11).

10. Frame section or façade section according to one of the preceding claims 7 to 9, **characterized in that** the cable sheath (15) is provided with a groove-like notch (13) which extends parallel to the conductors (14).

11. Frame section or façade section according to one of the preceding claims 7 to 10, **characterized in that** the notch (13) has a tapering, preferably conical cross-section and penetrates the cable by more than 50%, preferably almost entirely.

12. Frame section or façade section according to one of claims 7 to 11, **characterized in that** the cable groove (11) and the cable are matched to one another in such a way that it is possible to contact the conductors of the cable from the outside by means of insulation-piercing or insulation-cutting contacts.

13. Frame section or façade section according to one of the preceding claims, **characterized in that** the cable groove (12) and the fitting groove (9) have a common base lying in one plane.

14. Frame section or façade section according to one of the preceding claims, **characterized in that** the groove (9) for the fittings has lateral limiting webs (27a, 28a).

15. Frame section or façade section according to one of the preceding claims, **characterized in that** the limiting webs (27a, 28a) of the fitting groove (9) and the cable groove webs (21) have a height ratio of 1/3.

16. Façade section according to one of the preceding claims, **characterized in that** the cable groove (111) is formed perpendicular to the pane plane on the inner section (104).

17. Window, door or façade element with a frame or façade section according to one of the above claims.

## Revendications

1. Profilé de cadre (1, 2, 3, 4) pour un cadre dormant ou battant d'une fenêtre, d'une porte ou profilé de façade d'une façade avec une rainure de câble (11) en contre-dépouille disposée sur la périphérie extérieure du profilé pour recevoir par complémentarité de forme un câble électrique (12) comportant au moins deux conducteurs électriques (14) ou plus, **caractérisé en ce que** la rainure de câble (11) est formée sur le profilé de cadre à l'intérieur d'une rainure (9) plus grande qui l'entoure, en particulier à l'intérieur d'une rainure pour ferrures (9) destinée à recevoir des ferrures.

2. Profilé de cadre ou profilé de façade selon la revendication 1, **caractérisé en ce que** la rainure s'étend dans la direction longitudinale du profilé de cadre (1, 2, 3, 4).

3. Profilé de cadre ou profilé de façade selon l'une des revendications précédentes, **caractérisé en ce que** le profilé de cadre est réalisé sous la forme d'une coque intérieure (4) d'un profilé composite.

4. Profilé de cadre ou profilé de façade selon l'une des revendications précédentes, **caractérisé en ce que** la rainure de câble (12) présente des nervures de délimitation latérales (21) qui font saillie angulairement, en particulier à angle droit, depuis le fond.

5. Profilé de cadre ou profilé de façade selon l'une des revendications précédentes, **caractérisé en ce que** d'autres nervures (22) dirigées l'une vers l'autre sont formées aux extrémités libres des nervures de délimitation (21) de la rainure de câble (11) et forment une contre-dépouille.

6. Profilé de cadre ou profilé de façade selon l'une des revendications précédentes, **caractérisé en ce que** les nervures de délimitation (22) sont pourvues de chanfreins (23) vers le côté d'ouverture de rainure.

7. Profilé de cadre ou profilé de façade selon l'une des revendications précédentes, avec un câble plat (12) qui est reçu par complémentarité de forme dans la rainure de câble et qui présente plusieurs conducteurs (4) disposés parallèlement les uns aux autres dans un plan.

8. Profilé de cadre ou profilé de façade selon la revendication 7, **caractérisé en ce que** le câble plat (12) présente plusieurs, de préférence quatre conducteurs ou torons (14) disposés parallèlement les uns aux autres dans un plan, qui présentent chacun un brin et un isolant et qui sont noyés dans la gaine (15) du câble plat (12).

9. Profilé de cadre ou profilé de façade selon l'une des revendications 7 ou 8 précédentes, **caractérisé en ce que** le câble plat (12) présente des ergots latéraux (17) qui, à l'état monté, s'engagent élastiquement derrière des nervures (22) de la rainure de câble (11).

10. Profilé de cadre ou profilé de façade selon l'une des revendications 7 à 9 précédentes, **caractérisé en ce que** la gaine de câble (15) est pourvue d'une entaille (13) en forme de rainure qui s'étend parallèlement aux conducteurs (14).

11. Profilé de cadre ou profilé de façade selon l'une des revendications 7 à 10 précédentes, **caractérisé en ce que** l'entaille (13) présente une section transversale se rétrécissant, de préférence conique, et pénètre le câble de plus de 50 %, de préférence presque complètement.

12. Profilé de cadre ou profilé de façade selon l'une des revendications 7 à 11, **caractérisé en ce que** la rainure de câble (11) et le câble sont adaptés l'un à l'autre de telle sorte qu'un contact avec les brins du câble par l'extérieur est possible au moyen de contacts à perforation ou coupe d'isolant.

13. Profilé de cadre ou profilé de façade selon l'une des revendications précédentes, **caractérisé en ce que** la rainure de câble (12) et la rainure pour ferrures (9) présentent un fond commun situé dans un plan.

14. Profilé de cadre ou profilé de façade selon l'une des revendications précédentes, **caractérisé en ce que** la rainure (9) pour les ferrures présente des nervures de délimitation latérales (27a, 28a).

15. Profilé de cadre ou profilé de façade selon l'une des revendications précédentes, **caractérisé en ce que** les nervures de délimitation (27a, 28a) de la rainure pour ferrures (9) et les nervures de rainure de câble (21) présentent un rapport de hauteur de 1/3.

16. Profilé de façade selon l'une des revendications précédentes, **caractérisé en ce que** la rainure de câble (111) est formée perpendiculairement au plan de vitre sur le profilé intérieur (104).

17. Fenêtre, porte ou élément de façade dotée d'un profilé de cadre ou de façade selon l'une des revendications précédentes.
